# EUROPEAN PATENT APPLICATION

(11) **EP 4 799 828 A1**
(43) Date of publication of application: **02.09.2026**
(21) Application number: 25161029.1
(22) Date of filing: 28.02.2025
(51) Int. Cl.: B60C 23/06, G01M 1/22, G07C 5/08

(54) **METHOD AND CONTROLLER FOR DETECTING A LOOSE WHEEL OF A VEHICLE, AND VEHICLE SYSTEM FOR A VEHICLE**

(71) Applicant: KB Intellectual Property GmbH & Co. KG, 82049 Pullach (DE)
(72) Inventor: GÜCKER, Ulrich, 80809 München (DE); HUMMEL, Stefan, 80809 München (DE); Szücs, Balazs, 80809 München (DE)

(57) **Abstract**

A method for detecting a loose wheel (105) of a vehicle (100) is presented. The method comprises a step of filtering a wheel speed signal (125) from at least one wheel speed sensor (120) of the vehicle (100), in order to generate a residual speed signal (135), which includes the part of the wheel speed signal (125) correlating or repeating with each revolution of the wheel (105) and in which vehicle speed transients are suppressed, wherein for the residual speed signal (135) intervals for complete wheel rotations are reconstructed. The method comprises a step of applying real-time signal feature extraction to the residual speed signal (135) to determine a feature vector (137). The method comprises a step of executing a machine learning classification algorithm on the feature vector (137) to evaluate the feature vector (137) in real time and classify data points in classes of loose and tight wheels, in order to generate a detection result (139).

## Description

The present invention relates to a method for detecting a loose wheel of a vehicle, to a corresponding controller and to a vehicle system for a vehicle.

The issue of loosening wheels on vehicles is a well-known phenomenon on roads. Especially commercial vehicle wheels are heavy and capable of causing damage when breaking loose during driving. Loose wheels may occur due to vibrations, impacts from roadside objects or from imprecise maintenance of the wheels. If the wheel nuts are not tightened properly to the defined torque values when changing tires or wheels, the nuts may become loose during driving and might let the wheel fall from the hub. Even if the wheel does not break loose, the hub and the screws may get destroyed rather quickly. Modern vehicles mounted with ABS or EBS brake systems usually have wheel speed sensors on most of the wheels. Such sensors measure the rotation speed of the wheel using active or passive sensing technology and pole wheels rotating opposite the sensor. The pole wheels have defined numbers of teeth and gaps which, by rotating before the sensor, generate changes in the magnetic field, which can be measured by the sensor. The sensors can measure teeth frequency and the time between edges of the pole wheel teeth.

Known loose wheel monitoring systems usually use either the raw data from these sensors, meaning all the timestamps of the edges are used, or frequency domain analysis of the wheel speed signals to identify loosening wheels. EP 3 250 424 B1 relates to a loose wheel detection method based on two detection paths. The first is calculating and monitoring the tooth imperfections of the pole wheel. The second is using a band pass filter and calculates the cumulative sum of its variance. If any of these two exceeds the defined threshold, a loose wheel is detected. US 11 420 486 B2 relates to wheel release detection, wherein loose wheels are determined by two consecutive FFTs on the wheel speed signal.

Against this background, it is the object of the present invention to provide an improved method for detecting a loose wheel of a vehicle, an improved controller and an improved vehicle system for a vehicle.

This object is achieved by a method for detecting a loose wheel of a vehicle, by a controller and by a vehicle system for a vehicle according to the main claims.

A method for detecting a loose wheel of a vehicle comprises the steps of:
filtering a wheel speed signal from at least one wheel speed sensor of the vehicle, in order to generate a residual speed signal, which includes the part of the wheel speed signal correlating or repeating with each revolution of the wheel and in which vehicle speed transients are suppressed, wherein for the residual speed signal intervals for complete wheel rotations are reconstructed;
applying real-time signal feature extraction to the residual speed signal to determine a feature vector; and
executing a machine learning classification algorithm on the feature vector to evaluate the feature vector in real time and classify data points in classes of loose and tight wheels and/or generate a probability for a loose wheel, with different classes to assess a loose wheel situation, in order to generate a detection result.

The method or the steps of the method may be executed or implemented using a computer or controller. The method may also include a step of reading the wheel speed signal, or a raw wheel speed signal, via interface from the at least one wheel speed sensor. The method may also include a step of outputting the detection result as a signal via an interface to a technical device of the vehicle. The detection result may represent the detection of a loose wheel or a tight wheel based on the classification. The technical device may include a signalling device, a display device, an audio device, a vehicle ECU and/or an assistance system. The step of applying and the step of executing may also be combined in a step of performing feature extraction and machine learning classification by using a neural network algorithm on the residual speed signal. According to embodiments, for example, there may be provided a loose wheel monitoring method based on wheel speed signals. In other words, there may be provided a method of detecting loose wheels based on wheel speed information, which is suitable for easy and cost-efficient integration into real-time control systems: on the one hand by reducing the complexity of the calculation, by avoiding FFT calculation, and on the other hand by reducing the amount of input data and by preferring or allowing for the usage of windowed pre-processed wheel speed signals instead of the detailed raw time-stamp information of the wheel speed sensors. Momentary wheel speeds may be calculated cyclically from the timestamps of pulses within the observation window. The method may run with both the event-based raw sensor data sampled at the events of captured edges of the pole wheel or the time-based fixed sampling rate momentary wheel speed data. The method may include a filtering step to separate the wheel speed signal into two parts: a first part that correlates or repeats with each rotation of the wheel, and a second part that correlates with the vehicle speed and includes transients of the vehicle speed. It shall be assumed that the noise introduced by a loose wheel is only visible in the first signal part. The second part has been found not to contain any additional information regarding the looseness of the wheel, but due to its time varying nature, when accelerating or braking the vehicle, may even disturb the detection. The aim of the residual speed calculation is to provide only the first wheel signal part, which correlates with revolution of the wheel, and suppress second part, thus making the effect of the loose wheel visible and possible to detect. Another aspect of the suggested method is to reconstruct the interval for complete rotation of the wheel to aid the feature extraction. The method may execute feature extraction on the calculated residual speed signals and apply a machine learning clustering algorithm on the real-time calculated feature vector for the feature-based classification to decide if a wheel has become loose.

According to an embodiment, the steps of the method may use a single detection path.

According to another embodiment, the step of filtering may be performed by using a moving average filter having a window length of at least one complete wheel rotation, or alternatively an adaptive low-pass or high-pass filter with adjustable corner frequency calculated based on momentary wheel speeds.

According to a further embodiment, signal processing may be synchronized with the rotation of the wheel.

According to an embodiment, the step of applying may be performed by using features extracted from time domain data of the residual speed signal.

According to another embodiment, the step of applying may be performed by detecting signature waveforms of a loose wheel in the residual speed signal by identifying heuristics features.

According to a further embodiment, the step of applying may be performed by using wheel-level, axle-level and/or vehicle-level wheel speed groups to extract features.

Preferably, the method may comprise a step of pre-processing a raw wheel speed signal to generate the wheel speed signal. Herein, the raw wheel speed signal may include teeth frequency information and timestamps of passing pole wheel teeth edges of the at least one wheel speed sensor. Also, the wheel speed signal may be calculated cyclically from pole wheel pulse timestamps, wherein the wheel speed signal may be windowed and may include only the wheel speed of the wheel. Additionally or alternatively, the validity of the raw wheel speed signal may be checked.

The approach presented here further provides a controller configured to perform, control or implement the steps of a variant of a method presented here in corresponding devices. The object underlying the invention may be achieved quickly and efficiently also by way of this embodiment of the invention in the form of a controller.

The controller may be configured to read input signals and to determine and provide output signals using the input signals. For example, an input signal may represent a sensor signal readable via an input interface of the controller. An output signal may represent a control signal or a data signal which can be provided at an output interface of the controller. The controller may be configured to determine the output signals using a processing rule implemented in hardware or in software. For example, the controller may comprise a logic circuit, an integrated circuit or a software module and may, for example, be realized as a discrete component or be included in a discrete component.

The approach presented here also provides a vehicle system for a vehicle, wherein the vehicle system comprises:
an embodiment of the controller presented herein; and
at least one wheel speed sensor, wherein the controller and the at least one wheel speed sensor are connected to each other for signal transmission.

In particular, the vehicle system may be configured to function as a loose wheel monitoring system.

What is also advantageous is a computer program product having program code which may be stored on a machine-readable carrier, such as semiconductor memory, hard disk or optical memory, and is used for performing the method one of the previously described embodiments, when the program product is executed on a computer or a controller.

Embodiments of the approach presented here shall be explained in greater detail in the subsequent description with reference to the figures, wherein:
Fig. 1 shows a schematic illustration of a vehicle comprising a vehicle system according to an embodiment;
Fig. 2 shows a flowchart of a method for detecting a loose wheel of a vehicle according to an embodiment;
Fig. 3 shows a schematic illustration of residual speed calculation in connection with the controller of the vehicle system of Fig. 1 and/or the method of Fig. 2;
Fig. 4 shows a schematic diagrams of residual speed wheel rotation reconstruction in connection with the controller of the vehicle system of Fig. 1 and/or the method of Fig. 2; and
Fig. 5 shows a schematic diagram of residual speed data on a selected feature plane in connection with the controller of the vehicle system of Fig. 1 and/or the method of Fig. 2.

In the following description of advantageous embodiments of the present invention, the same or similar reference numerals shall be used for the elements depicted in the various figures and acting in a similar way, wherein repeated description of these elements shall be omitted.

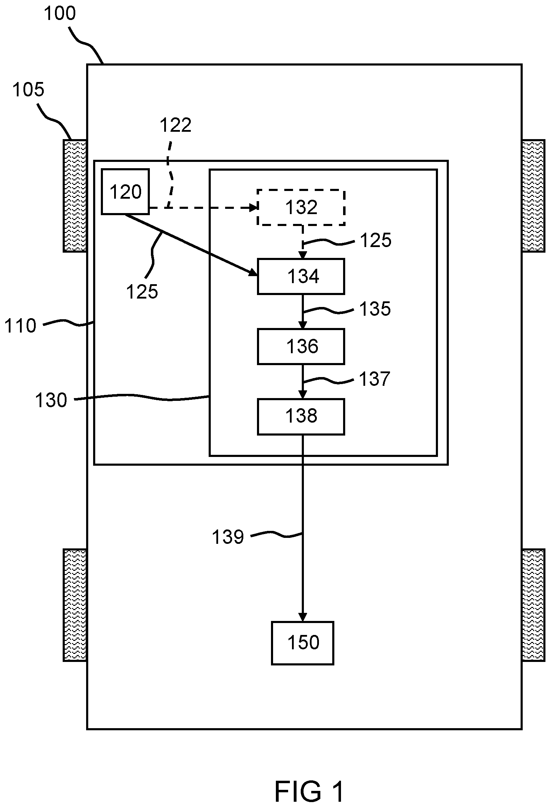

**Fig. 1** shows a schematic illustration of a vehicle 100 comprising a vehicle system 110 according to an embodiment. The vehicle 100 is a motor vehicle. For example, the vehicle 100 is a commercial vehicle. For example, the vehicle 100 has a plurality of wheels 105, for example two, four or more. The vehicle system 110 functions as a loose wheel monitoring system or loose wheel detection system. The vehicle system 110 comprises at least one wheel speed sensor 120 and a controller 130 configured to detect a loose wheel 105.

Each wheel 105 may have at least one wheel speed sensor 120 associated therewith. The at least one wheel speed sensor 120 is configured to sense wheel rotation speed of one of the wheels 105 of the vehicle 100. Furthermore, the at least one wheel speed sensor 120 is configured to provide a wheel speed signal 125, or a raw wheel speed signal 122.

The controller 130 and the at least one wheel speed sensor 120 are connected to each other for signal transmission. The controller 130 comprises a filtering unit 134, an applying unit 136 and an executing unit 138. According to an embodiment, the controller 130 also comprises a pre-processing unit 132.

The filtering unit 134 is configured to filter the wheel speed signal 125 in order to generate a residual speed signal 135. The residual speed signal 135 includes the part of the wheel speed signal 125 correlating or repeating with each revolution of the wheel 105 and in which vehicle speed transients are suppressed. For the residual speed signal 135, intervals for complete wheel rotations are reconstructed. The filtering unit 134 is also configured to pass the residual speed signal 135 on to the applying unit 136.

The applying unit 136 is configured to apply real-time signal feature extraction to the residual speed signal 135 to determine a feature vector 137. Furthermore, the applying unit 136 is configured to pass the feature vector 137 on to the executing unit 138.

The executing unit 138 is configured to execute a machine learning classification algorithm on the feature vector 137 to evaluate the feature vector 137 in real time and classify data points in classes of loose and tight wheels, in order to generate a detection result 139.

According to an embodiment, the controller 130 is also configured to output the detection result 139 as a signal via an interface to a technical device 150 of the vehicle 100. The detection result 139 represents the detection of a loose wheel or a tight wheel based on the classification executed by the executing unit 138. The technical device 150 includes a signalling device, a display device, an audio device, a vehicle ECU and/or an assistance system, for example. Based on the detection result 139, the technical device 150 is configured to trigger a reaction.

According to an embodiment, the controller 130 is also configured to receive or read the wheel speed signal 125 via an interface from the at least one wheel speed sensor 120. According to another embodiment, the controller 130 is configured to receive or read a raw wheel speed signal 122 via an interface from the at least one wheel speed sensor 120. In this case, the controller 130 further comprises a pre-processing unit 132 configured to pre-process the raw wheel speed signal 122 to generate the wheel speed signal 125, and the filtering unit 134 is configured to receive or read the wheel speed signal 125 from the pre-processing unit 132.

Further details regarding the loose wheel detection by means of the controller 130 shall be provided in the following.

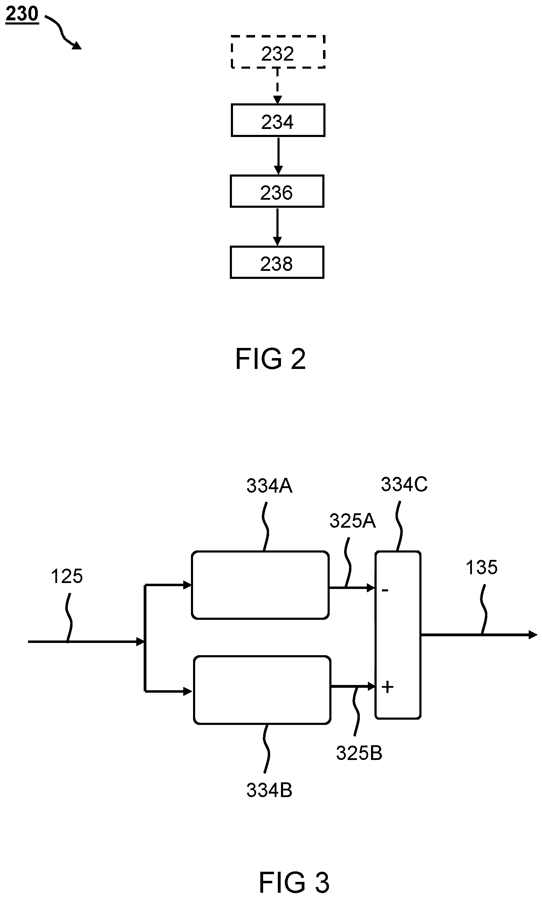

**Fig. 2** shows a flowchart of a method 230 for detecting a loose wheel of a vehicle according to an embodiment. The method 230 for detecting is executable by means of the controller shown in Fig. 1 or a similar controller. The method 234 detecting comprises a step 234 of filtering, a step 236 of applying and a step 238 of executing.

In the step 234 of filtering, a wheel speed signal from at least one wheel speed sensor of the vehicle is filtered to generate a residual speed signal. This residual speed signal includes the part of the wheel speed signal correlating or repeating with each revolution of the wheel and in which vehicle speed transients are suppressed. For the residual speed signal, intervals for complete wheel rotations are reconstructed. In the step 236 of applying, real-time signal feature extraction is applied to the residual speed signal to determine a feature vector. In the step 238 of executing, a machine learning classification algorithm is executed on the feature vector to evaluate the feature vector in real time and classify data points in classes of loose and tight wheels, in order to generate a detection result.

According to an embodiment, steps of the method 230 use a single detection path. Furthermore, according to an embodiment, steps of the method 230 are part of one decision path. For example, signal processing is synchronized with the rotation of the wheel.

According to an embodiment the step 234 of filtering is performed by using a moving average filter having a window length of at least one complete wheel rotation, or alternatively by using an adaptive low-pass or high-pass filter with adjustable corner frequency calculated based on momentary wheel speeds.

According to an embodiment, the step 236 of applying is performed by using features extracted from time domain data of the residual speed signal and/or by detecting signature waveforms of a loose wheel in the residual speed signal by identifying heuristics features and/or by using at least one of the set of wheel-level, axle-level and vehicle-level wheel speed groups to extract features.

According to an embodiment, the method 230 detecting also comprises a step 232 of pre-processing a raw wheel speed signal to generate the wheel speed signal. This may also be referred to as wheel speed pre-processing or wheel speed signal pre-processing. For example, the wheel speeds are provided by wheel speed sensors connected to the brake system of the vehicle. The raw data of the speed sensors containing the teeth frequency information and the timestamps of the passing pole wheel teeth edges may also be pre-processed by external hardware or by the brake controller ECU itself. The momentary wheel speed signal is calculated cyclically from the pole wheel pulse timestamps. This cyclic calculation is referred to as windowing. The pre-processed wheel speed signals are windowed and contain only the wheel speed or rotation speed of the wheel. These signals are available with given update frequency in the time domain. In this case with 200 Hz, but the update rate could be higher or lower as well, depending on the used window size. In this pre-processing step 232, the validity of these wheel speed signals is also checked and handled.

**Fig. 3** shows a schematic illustration of residual speed calculation or generation in connection with the controller of the vehicle system of Fig. 1 and/or the method of Fig. 2. The residual speed calculation or generation is done by the filtering unit of the controller of the vehicle system or when performing the step of filtering of the method for detecting.

The illustration here shows the wheel speed signal 125, representing momentary wheel speed at a sample point in time. The wheel speed signal 125 is fed through a trend filter or moving average filter 334A in which all rotation-dependent noise is removed and through a smoothing filter 334B. After having passed through the filters 334A and 334B, the signal parts, i.e. trend 325A and smoothed signal 325B, are combined in a combination block 334C, in order to obtain the residual speed signal 135. The aim of subtracting the trend from the slightly smoothed signal is to show the periodic loose wheel effects in the resulting residual speed signal 135. The calculated trend 325A is the smoothed velocity of the rim.

Residual speed calculation aims to separate the vehicle speed transients part of the wheel speed signal 125 from the noise that correlates or repeats with each rotation of the wheel. In order to make this separation, several filtering methods can be used. However, a moving average filter may have an advantage in this use case above the others, because it has periodically repeated cutoff points in its frequency response, which can be utilized to remove the vehicle speed transients effectively. The basic structure of this calculation is shown in Fig. 3. On the one hand, all the vehicle speed transients of the wheel speed signal 125 should be filtered out to get the trend 325A, and on the other hand, there is the need for a slightly smoothed speed signal free from outlying data points. If the trend 325A is subtracted from the smoothed signal 325B, the so-called residual speed signal 135 that correlates with the wheel revolution and contains the information about the loose wheel is obtained. Thus, in this implementation example, the moving average filter was chosen to calculate the residual speed, but adaptive low-pass filters or adaptive high-pass filters can deliver similar results. The adaptive filters can be implemented using a recursive structure, which is more memory-efficient compared to non-recursive implementation. The corner frequency of the adaptive filters shall be adjusted with the momentary wheel speed. The parameter of such filters can be calculated similarly as the window length of the dynamic moving average filter shown in Equation 1. To fully utilize the advantage of a moving average filter, the window size is to be selected appropriately. The window length should be exactly the length of one wheel rotation or multiple complete wheel rotations so that all signal components that repeat with one revolution are suppressed perfectly. If this signal, i.e. the trend 325A, is subtracted from the original 125 or the smoothed signal 325B, the residual speed that correlates with the wheel revolution can be obtained. The momentary wheel rotation length can be calculated from the wheel speed signal 125 v_{wheel}(k), as described in Equation 1. ${window}_{length} \left(k\right) = \frac{{T}_{sample}}{2 ∗ R ∗ π} ∗ {v}_{wheel} \left(k\right)$

So as to achieve optimal performance, a dynamic moving average filter 334A that works on the buffered wheel speed data and calculates the moving average using the momentary wheel rotation window length is used as a trend filter. The smoothing filter 334B can be any type of low-pass, band-pass or averaging filter, the only task for this filter is to remove the outlying data points by applying a little filtering. Smoothing the signal is not a critical step, it may be also neglected, by using the unfiltered wheel speed. For example, a fixed 3-sample window length moving average filter was used for this purpose in the implementation example.

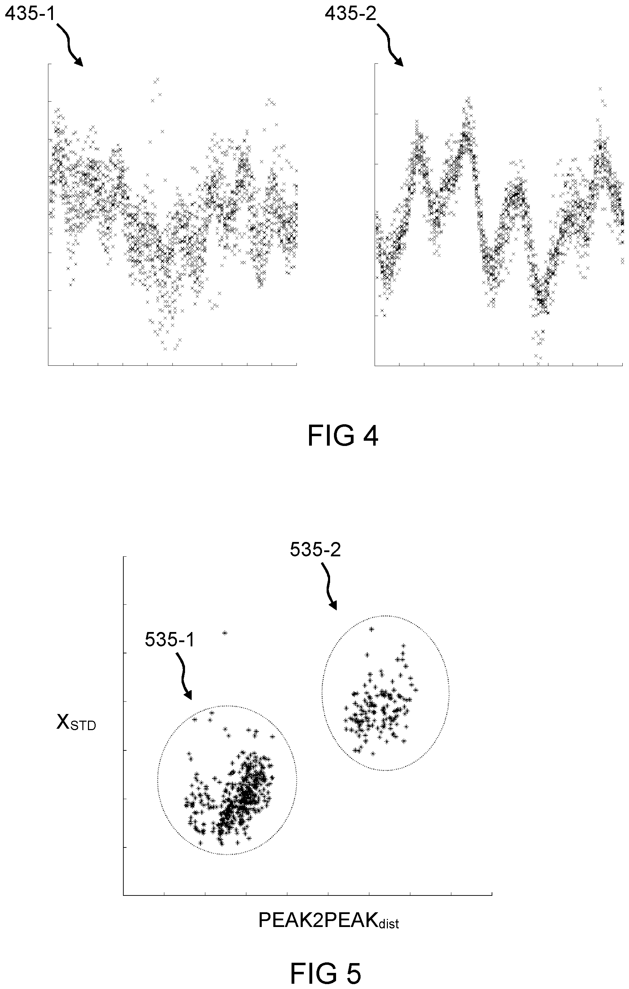

**Fig. 4** shows schematic diagrams of residual speed wheel rotation reconstruction in connection with the controller of the vehicle system of Fig. 1 and/or the method of Fig. 2. The residual speed calculation or generation is done by the filtering unit and/or the applying unit of the controller of the vehicle system or when performing the step of filtering and/or the step of applying of the method for detecting. The illustration shows a first diagram depicting first residual speed data 435-1 and a second diagram depicting second residual speed data 435-2. The first residual speed data 435-1 represent a tight wheel, with residual speed stacked. The second residual speed data 435-2 represent a loose wheel, with residual speed stacked.

To simplify the feature extraction, it was focused on the time domain features instead of frequency domain features. In order to cluster the data in groups of loose wheels and tight wheels, it is necessary to find features which have high importance and are possibly independent from each other. This is important because such features can reliably span out a space where the data is clearly separable. It is to be noted that significant signatures of the residual speed data could be identified, which indicate loose wheels. By the reconstruction of the interval for complete rotation of the wheel, it is possible to amplify the effect of the loose wheel in the data. If the residual speed data is cut to wheel rotation length segments and stacked, a signature waveform appears in case of a loose wheel. The randomness of the residual speed noise within the wheel rotations decreases, and a dominant disturbance appears as the loose wheel movement is added on. Within a wheel rotation, there is a repeating periodic movement of the rim, which can be identified through features of the residual speed signal calculated before. Fig. 4 shows an example of this phenomenon.

To be able to extract features of this representation, the residual speed data shall be collected on a wheel rotation basis. There are several possible approaches to achieve this goal. One possibility is to convert the wheel speed data to rotation basis and include an interpolation step in the calculation flow, thus reaching an equal number of points per rotation, regardless of the time domain sampling. The other possibility is to track the wheel rotation in real-time and collect the wheel speed data from one wheel rotation. In the implementation example, this approach was taken. The wheel rotation can be tracked by integrating the wheel speeds as shown in Equation 2, or similarly by integrating the rotation speed and do the tracking in angle of rotation instead of rotation. ${rot}_{k} = {rot}_{k - 1} + \frac{1}{2 Rπ} ∗ {v}_{k} ∗ {dt}_{k}$

Based on the rotation information, the residual speed can be cut to one wheel rotation length sections in real-time, and the calculation of the feature variables can be triggered. These features can be time-domain or even frequency-domain properties of the residual speed signal. The selected features can be statistical like standard-deviation, root-mean square, kurtosis, skewness, or correlation. They can be impulse metrics like peak value, peak-to-peak distance, or impulse factor. It is possible to use signal processing metrics like SNR, THD and SINAD. Another powerful source of features are heuristics, like counting the number peaks and how they are related to each other. The target of their selection is that they shall span out a space where there is a good enough separation of the loose wheel data from the tight wheel data. Also, such features which can be calculated efficiently in real-time should be selected. Therefore, time-domain features may be given priority over the frequency-domain ones since these require real-time FFT, which has high resource consumption.

In the implementation example, two features are chosen to illustrate a possible implementation of the method, but the method is not restricted to these features and the number of used features is also freely scalable. There may be wheel level features, meaning that they are calculated individually for a wheel, but there may be other features as well. Axle level features that use information about the counter side wheel. Any other, wheel boogie level, sidewise, type wise (single, double, driven, steerable, liftable, front, rear), even vehicle level grouping of wheel speed is possible. In summary, any selection of wheel speed signal groups that make it possible to identify the mentioned phenomenon may be considered here.

In this implementation example, one feature was chosen to be the standard deviation of the residual speed for each rotation sequence. In the present case, the standard-deviation (Equation 3) and the root-mean square (Equation 4) values are equivalent, since the residual speed has an expected value or mean value of zero. In these equations, N runs from 1 to the number of samples in the rotation, and x are the samples of residual speed. ${X}_{STD} = \sqrt{\frac{1}{N} {\sum }_{i = 1}^{N} {\left({x}_{i}-\overline{x}\right)}^{2}}$ ${X}_{RMS} = \sqrt{\frac{1}{N} {\sum }_{i = 1}^{N} {x}_{i}^{2}}$

The second feature was the peak-to-peak distance of the residual speed on wheel rotation basis.

With these two features, sufficient separation between data from measurements with loose wheels and data from measurements with all wheels tight can be achieved, as can also be seen from the following figure. However, adding further features increases the robustness of the method, for example, against bad road conditions, changing axle loads, deflated tires, and other sources of wheel speed noises, which are to be separated from the loose wheel scenario.

**Fig. 5** shows a schematic diagram of residual speed data on a selected feature plane in connection with the controller of the vehicle system of Fig. 1 and/or the method of Fig. 2, in particular the applying unit of the controller of the vehicle system or when performing the step of applying of the method for detecting. On the abscissa of the diagram, there is plotted the peak-to-peak distance PEAK2PEAK_{dist} of the residual speed per rotation, and on the ordinate of the diagram, there is plotted the standard deviation X_{STD}. The diagram shows a first cluster 535-1 of tight wheel data and a second cluster 535-2 of loose wheel data. The clusters are fully separated.

Subsequently, classification is executed based on the real-time calculated feature vector. There are many existing classification methods, which can separate data in defined feature spaces. The selection of one or another classification algorithm on the one hand depends on the extracted features, and on the other hand the selected classification method should have low runtime and memory consumption for embedded automotive applications. If the data is linearly separable, then linear methods like linear SVM (support vector machine) can be used, or otherwise non-linear approaches like decision trees, Naive Bayes, k-Nearest Neighbours (KNN), Random Forests or SVM with nonlinear kernel functions can be used. Different learning methods are possible, such as supervised and unsupervised learning. Unsupervised learning is more generic, and is mostly used with black-box models like neural networks or genetic algorithm. However, the above-mentioned simple classification algorithms can be trained offline as supervised learning on datasets from real vehicle measurements. Then the selected algorithm can be used with the optimized parameters in the real-time environment.

For the implementation example, it was chosen to show the results of the easily interpretable coarse tree algorithm, because on this simple feature plane it could already deliver over 98% accuracy. However, the suggested loose wheel monitoring method is not limited to this classification algorithm. Further extension of the feature space can make other methods more effective. In this example, supervised training of the classification method was executed on a labelled database containing more than 200 measurements.

With reference to the figures previously described, embodiments shall be summarised briefly and in other words in the following.

According to an embodiment, the loose wheel detection method 230 and/or the controller 130 includes separation of wheel speed signals 125 into two parts: the first part that correlates or repeats with each revolution of the wheel and the second part which correlates with the vehicle speed. The assumption is that the typical pattern of a loose wheel is only visible in the first signal part. Therefore, the residual speed calculation provides the solution where only the first wheel signal part that correlates with revolution of the wheel is kept whereas the second part is suppressed. According to an embodiment, the loose wheel detection method 230 and/or the controller 130 includes using a moving average filter having the window length of at least one complete wheel rotation to calculate the residual speed, or alternatively an adaptive low-pass or high-pass filter with adjustable corner frequency calculated based on the momentary wheel speeds. According to an embodiment, the loose wheel detection method 230 and/or the controller 130 includes a single detection path. According to an embodiment, the loose wheel detection method 230 and/or the controller 130 includes reconstruction of the intervals for complete wheel rotations together and using this information for signal filtering and the filtered signal as input for a classification algorithm. According to an embodiment, the loose wheel detection method 230 and/or the controller 130 includes synchronizing the signal processing with the rotation of the wheel 105. According to an embodiment, the loose wheel detection method 230 and/or the controller 130 includes applying real-time signal feature extraction to the calculated residual speed signal 135. According to an embodiment, the loose wheel detection method 230 and/or the controller 130 includes using features extracted from time domain data. According to an embodiment, the loose wheel detection method 230 and/or the controller 130 includes detecting signature waveforms of the loose wheel in the residual speed signal 135, by identifying heuristics features. According to an embodiment, the loose wheel detection method 230 and/or the controller 130 includes using wheel level, axle level or even vehicle level wheel speed groups to extract the features. According to an embodiment, the loose wheel detection method 230 and/or the controller 130 includes using a machine learning algorithm to evaluate the feature vector 137 in real time and classify the data points in classes of loose and tight wheels.

### REFERENCE NUMERAL LIST

- 100: vehicle
- 105: wheel
- 110: vehicle system
- 120: wheel speed sensor
- 122: raw wheel speed signal
- 125: wheel speed signal
- 130: controller
- 132: pre-processing unit
- 134: filtering unit
- 135: residual speed signal
- 136: applying unit
- 137: feature vector
- 138: executing unit
- 139: detection result
- 150: technical device

- 230: method for detecting
- 232: step of preprocessing
- 234: step of filtering
- 236: step of applying
- 238: step of executing

- 334A: moving average filter
- 334B: smoothing filter
- 334C: combination block
- 325A: trend
- 325B: smoothed signal

- 435-1: first residual speed data
- 435-2: second residual speed data

- 535-1: first cluster
- 535-2: second cluster
- PEAK2PEAK_{dist}: peak-to-peak distance
- X_{STD}: standard deviation

## Claims

1. Method (230) for detecting a loose wheel (105) of a vehicle (100), wherein the method (230) comprises the steps of:
filtering (234) a wheel speed signal (125) from at least one wheel speed sensor (120) of the vehicle (100), in order to generate a residual speed signal (135), which includes the part of the wheel speed signal (125) correlating or repeating with each revolution of the wheel (105) and in which vehicle speed transients are suppressed, wherein for the residual speed signal (135) intervals for complete wheel rotations are reconstructed;
applying (236) real-time signal feature extraction to the residual speed signal (135) to determine a feature vector (137); and
executing (238) a machine learning classification algorithm on the feature vector (137) to evaluate the feature vector (137) in real time and classify data points in classes of loose and tight wheels and/or generate a probability for a loose wheel, with different classes to assess a loose wheel situation, in order to generate a detection result (139).

2. Method (230) according to claim 1, wherein the steps (232, 234, 236, 238) of the method (230) use a single detection path.

3. Method (230) according to one of the preceding claims, wherein the step (234) of filtering is performed by using a moving average filter having a window length of at least one complete wheel rotation, or alternatively an adaptive low-pass or high-pass filter with adjustable corner frequency calculated based on momentary wheel speeds.

4. Method (230) according to one of the preceding claims, wherein signal processing is synchronized with the rotation of the wheel (105).

5. Method (230) according to one of the preceding claims, wherein the step (236) of applying is performed by using features extracted from time domain data of the residual speed signal (135).

6. Method (230) according to one of the preceding claims, wherein the step (236) of applying is performed by detecting signature waveforms of a loose wheel (105) in the residual speed signal (135) by identifying heuristics features.

7. Method (230) according to one of the preceding claims, wherein the step (236) of applying is performed by using wheel-level, axle-level and/or vehicle-level wheel speed groups to extract features.

8. Method (230) according to one of the preceding claims, comprising a step (232) of pre-processing a raw wheel speed signal (122) to generate the wheel speed signal (125), wherein the raw wheel speed signal (122) includes teeth frequency information and timestamps of passing pole wheel teeth edges of the at least one wheel speed sensor (120), wherein the wheel speed signal (125) is calculated cyclically from pole wheel pulse timestamps, wherein the wheel speed signal (125) is windowed and includes only the wheel speed of the wheel (105), and/or wherein the validity of the raw wheel speed signal (122) is checked.

9. Controller (130) comprising devices (132, 134, 136, 138) for performing, controlling or implementing the steps (232, 234, 236, 238) of the method (230) according to one of the preceding claims.

10. Vehicle system (110) for a vehicle (100), wherein the vehicle system (110) comprises:
the controller (130) according to claim 9; and
at least one wheel speed sensor (120), wherein the controller (130) and the at least one wheel speed sensor (120) are connected to each other for signal transmission.

11. Computer program product with program code for performing the method (230) according to one of claims 1 to 8, when the computer program product is executed on a controller (130).
